(19) Europäisches Patentamt / European Patent Office / Office européen des brevets

(11) EP 2 954 013 B1

(12) EUROPÄISCHE PATENTSCHRIFT

(45) Veröffentlichungstag und Bekanntmachung des Hinweises auf die Patenterteilung:
**15.11.2017 Patentblatt 2017/46**

(21) Anmeldenummer: **14705733.5**

(22) Anmeldetag: **07.02.2014**

(51) Int Cl.:
***C09D 7/00*** *(2006.01)*

(86) Internationale Anmeldenummer:
**PCT/EP2014/052460**

(87) Internationale Veröffentlichungsnummer:
**WO 2014/122276 (14.08.2014 Gazette 2014/33)**

# (54) ALPHA,OMEGA-HYDROXYFUNKTIONALISIERTER OLIGOESTER ALS HAFTUNGSVERMITTLER IN LÖSEMITTELBASIERTEN FÜLLERN

ALPHA,OMEGA-HYDROXYL-FUNCTIONALISED OLIGOESTER AS AN ADHESION PROMOTER IN SOLVENT-BASED FILLERS

OLIGOESTER ALPHA,OMEGA-HYDROXYFONCTIONNALISÉ EN TANT QUE PROMOTEUR D'ADHÉSION DANS DES MATIÈRES DE CHARGE À BASE DE SOLVANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.02.2013 US 201361761763 P**
**07.02.2013 EP 13154443**

(43) Veröffentlichungstag der Anmeldung:
**16.12.2015 Patentblatt 2015/51**

(73) Patentinhaber: **BASF Coatings GmbH**
**48165 Münster (DE)**

(72) Erfinder:
- **ANDERSEN, Audree**
  **48329 Havixbeck (DE)**
- **CORTEN, Cathrin**
  **59423 Unna (DE)**
- **SAEDLER, Markus**
  **48163 Münster (DE)**
- **RAKA, Fatmir**
  **48149 Münster (DE)**
- **FÖLLING, Frederik**
  **48165 Münster (DE)**
- **FREITAG, Nicole**
  **48163 Münster (DE)**
- **BOSHE-PLOIS, Stefanie**
  **48607 Ochtrup (DE)**
- **STEFFENS, Alexandra**
  **48161 Münster (DE)**

(74) Vertreter: **BASF IP Association**
**BASF SE**
**G-FLP-C006**
**67056 Ludwigshafen (DE)**

(56) Entgegenhaltungen:
**EP-A2- 2 075 075**
**WO-A1-02/20637**
**WO-A1-03/029319**
**WO-A1-2010/046333**
**WO-A1-2013/124322**
**DE-A1- 19 924 172**
**JP-A- 2010 227 753**
**US-A1- 2006 069 202**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 954 013 B1

## Beschreibung

Die Erfindung betrifft einen lösemittelbasierten Füller. Sie betrifft weiterhin ein Verfahren zur Herstellung einer Mehrschichtlackierung auf einem Substrat sowie eine Mehrschichtlackierung auf einem Substrat. Schließlich betrifft die vorliegende Erfindung die Verwendung eines alpha,omega-hydroxyfunktionalisierten Oligoesters zur Haftungsverbesserung in einem lösemittelbasierten Füller.

An den Lackaufbau von Nutzfahrzeugen werden hohe Anforderungen gestellt. Ein typischer Aufbau ist dergestalt, dass auf einem gegebenenfalls mit einer Elektrotauchlackierung beschichteten Metallsubstrat eine Füllerschicht und eine Decklackschicht aufgebracht werden. Üblicherweise vereint die Decklackschicht die Funktionen eines Basis- und eines Klarlacks miteinander. Dementsprechend enthält ein Decklack beispielsweise Pigmente und bedingt somit im Wesentlichen den farblichen Gesamteindruck der Lackierung. Weiterhin besitzt er auch typische, für einen Klarlack charakteristische Eigenschaften wie zum Beispiel eine entsprechende Kratzfestigkeit.

Üblicherweise handelt es sich sowohl bei dem Füller als auch bei dem Decklack um lösemittelbasierte Systeme. Die Lackierung von Nutzfahrzeugen erfolgt vielfach nicht automatisch. Das heißt die entsprechenden Beschichtungsstoffe werden von Hand also beispielsweise mittels Spritzapplikation aufgetragen. In solchen Fällen werden vornehmlich Zweikomponenten-Lacksysteme verwendet, die eine Härtung bei moderaten Temperaturen erlauben. Ein nach wie vor großes Problem bei einer hieraus resultierenden Lackierung stellt die Haftung zwischen Füller- und Decklackschicht dar.

Der vorliegenden Erfindung lag daher die Aufgabe zu Grunde, die Haftung zwischen der Füllerschicht und den an diese angrenzenden Schichten zu verbessern. Insbesondere bestand die Aufgabe darin, die Haftung zwischen der Füller- und der Decklackschicht zu verbessern. Dies soll durch den Einsatz von Haftungsvermittlern im Füller erreicht werden.

Die Haftung zwischen Füller- und Decklackschicht soll auch nach einer Belastung des Substrats zum Beispiel nach Bewitterung erhalten bleiben. Darüber hinaus soll der den Haftungsvermittler enthaltende Füller eine hervorragende Lagerstabilität aufweisen. Darunter ist insbesondere zu verstehen, dass nach mehrmonatiger Lagerung keine signifikante Verschlechterung der erzielbaren Haftungsverbesserung zu verzeichnen ist.

Diese Aufgabe wird überraschenderweise durch einen lösemittelbasierten Füller gelöst, der mindestens einen alpha,omega-hydroxyfunktionalisierten Oligoester enthält, welcher eine OH-Zahl von 30 bis 160 mg KOH/g,
eine Säurezahl von 0 bis 10 mg KOH/g, einen theoretischen Kohlenstoff-Kohlenstoff-Doppelbindungsgehalt von 1 bis 3 mmol/g, ein zahlenmittleres Molekulargewicht von 1000 bis 3000 g/mol und ein gewichtsmittleres Molekulargewicht von 2800 bis 10000 g/mol besitzt und wobei zudem die Summe über die gewichtsprozentualen Anteile aller alpha,omega-hydroxyfunktionalisierten Oligoester 0,5 bis 9 Gew.-% bezogen auf die Gesamtmenge des lösemittelbasierten Füllers beträgt.

Der Begriff alpha,omega-hydroxyfunktionalisierter Oligoester bezeichnet einen Oligoester, an dessen entgegengesetzten Enden, welche mit alpha beziehungsweise omega bezeichnet werden, sich jeweils eine Hydroxylgruppe befindet. Hierunter ist zu verstehen, dass ein solcher Oligoester an beiden Enden durch jeweils eine Monomereinheit terminiert ist, welche jeweils genau eine Hydroxylgruppe trägt. Handelt es sich um einen verzweigten Oligoester, so bezeichnen alpha und omega die Enden der längsten Polymerkette im Monomer. Die Länge bemisst sich dabei an der Anzahl der eingebauten Monomere. Es ist weiterhin nicht ausgeschlossen, dass der besagte alpha,omega-hydroxyfunktionalisierte Oligoester weitere Hydroxylgruppen besitzt. Es ist bevorzugt, dass der erfindungsgemäß einzusetzende alpha,omega-hydroxyfunktionalisierte Oligoester genau zwei Hydroxylgruppen jeweils eine in alpha- und eine in omega-Position besitzt. Es ist besonders bevorzugt, dass der erfindungsgemäß einzusetzende alpha,omega-hydroxyfunktionalisierte Oligoester genau zwei Hydroxylgruppen jeweils eine in alpha- und eine in omega-Position besitzt und zudem linear ist.

Der erfindungsgemäß einzusetzende alpha,omega-hydroxyfunktionalisierte Oligoester besitzt bevorzugt ein OH-Zahl von 40 bis 160 mg KOH/g und besonders bevorzugt von 70 bis 150 mg KOH/g. Die OH-Zahl kann nach DIN 53240 wie folgt bestimmt werden. Die Die OH-Gruppen werden durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1g Substanz gebundenen Menge Essigsäure äquivalent ist.

Weiterhin besitzt der erfindungsgemäß einzusetzende alpha,omega-hydroxyfunktionalisierte Oligoester eine Säurezahl von 0 bis 10 mg KOH/g, besonders bevorzugt 0 bis 5 mg KOH/g und ganz besonders bevorzugt 0 bis 3 mg KOH/g. Die Bestimmung der Säurezahl erfolgt gemäß DIN 53402. Dabei werden die in der Probe enthaltenden freien Säuren mit einer Kaliumhydroxid-Standardlösung in Anwesenheit eines Farbindikators titriert. Die Säurezahl entspricht der Masse an Kaliumhydroxid in mg, die zur Neutralisation von 1 g alpha,omega-hydroxyfunktionalisierten Oligoesters unter festgelegten Bedingungen erforderlich ist.

Der alpha,omega-hydroxyfunktionalisierte Oligoester besitzt weiterhin ein bevorzugtes zahlenmittleres Molekulargewicht von 1000 bis 2800 g/mol und besonders bevorzugt von 1200 bis 2600 g/mol sowie ein gewichtsmittleres Molekulargewicht von bevorzugt 3000 bis 8000 g/mol und besonders bevorzugt 3000 bis 7500 g/mol. Die Bestimmung

des zahlengewichteten und des massengewichteten Molekulargewichts erfolgt mittels Gelpermeationschromatographie mit Tetrahydrofuran als Elutionsmittel und unter Verwendung von Polystyrol-Standards. Das Säulenmaterial besteht aus Styrol-Divinylbenzol-Copolymeren.

Hinsichtlich der in dieser Patentanmeldung definierten Bereiche für das zahlen- und das gewichtsmittlere Molekulargewicht sei an dieser Stelle darauf hingewiesen, dass der Fachmann sich darüber im Klaren ist, dass immer nur solche Kombinationen des zahlen- und des gewichtsmittleren Molekulargewichtes möglich sind, bei denen das zahlengewichtete nicht größer als das gewichtsmittlere Molekulargewicht ist.

Es ist erfindungswesentlich, dass der besagte alpha,omega-hydroxyfunktionalisierte Oligoester einen theoretischen Kohlenstoff-Kohlenstoff-Doppelbindungsgehalt von 1 bis 3 mmol/g, bevorzugt von 1,4 bis 2,5 mmol/g und besonders bevorzugt von 1,6 bis 2,3 mmol/g besitzt. Unter dem theoretischen Kohlenstoff-Kohlenstoff-Doppelbindungsgehalt ist die Stoffmenge der Kohlenstoff-Kohlenstoff-Doppelbindungen in der Einheit mmol bezogen auf die Masse des alpha,omega-hydroxyfunktionalisierten Oligoesters in der Einheit Gramm zu verstehen. Als Kohlenstoff-Kohlenstoff-Doppelbindungen im Sinne der vorliegenden Erfindung werden keine solchen verstanden, die formal Bestandteil eines aromatischen Rings sind. So bleiben beispielsweise die drei formal in einem Benzolring enthaltenen Kohlenstoff-Kohlenstoff-Doppelbindungen bei der Berechnung des theoretischen Kohlenstoff-Kohlenstoff-Doppelbindungsgehalts unberücksichtigt. Der theoretische Kohlenstoff-Kohlenstoff-Doppelbindungsgehalt, in der unten dargestellten Formel als Doppelbindungsgehalt bezeichnet, wird wie folgt berechnet:

$$Doppelbindungsgehalt = \frac{Stoffmenge(Doppelbindungen)}{Masse(Oligoester)}.$$

Dabei bezeichnet der Ausdruck "Stoffmenge(Doppelbindungen)" die Stoffmenge der Kohlenstoff-Kohlenstoff-Doppelbindungen in der Einheit mmol und der Ausdruck "Masse(Oligoester)" die Masse des alpha,omega-hydroxyfunktionalisierten Oligoesters in der Einheit Gramm.

Die Masse des alpha,omega-hydroxyfunktionalisierten Oligoesters ist die Summe über die Massen der zu seiner Herstellung eingesetzten Monomere abzüglich der Masse des dabei entstehenden Wassers, wobei von einem vollständigen Umsatz aller Anhydrid- beziehungsweise Carbonsäuregruppen ausgegangen wird. Die Stoffmenge der Kohlenstoff-Kohlenstoff-Doppelbindungen ergibt sich aus der Stoffmenge der eingesetzten ungesättigten Monomere. Werden beispielsweise ausschließlich einfach ungesättigte Monomere, wie zum Beispiel Maleinsäureanhydrid, eingesetzt, so ist die Stoffmenge der Kohlenstoff-Kohlenstoff-Doppelbindungen gleich der Stoffmenge der eingesetzten ungesättigten Monomere. Werden beispielsweise zweifach ungesättigte Monomere eingesetzt, so ist die Stoffmenge der durch solche Monomere in den alpha,omega-hydroxyfunktionalisierten Oligoester eingeführten Kohlenstoff-Kohlenstoff-Doppelbindungen doppelt so groß wie die eingesetzte Stoffmenge des entsprechenden zweifach ungesättigten Monomers.

Der alpha,omega-hydroxyfunktionalisierte Oligoester lässt sich beispielsweise aus der Reaktion von Polycarbonsäuren mit Polyolen darstellen. Bevorzugt wird er aus Reaktion von Dicarbonsäuren sowie deren Anhydriden und Diolen, Triolen sowie monohydroxyfunktionellen Verbindungen hergestellt. Bevorzugt werden Diole eingesetzt.

Erfolgt die Herstellung des alpha,omega-hydroxyfunktionalisierten Oligoesters mit Dicarbonsäuren, so können grundsätzlich auch deren Anhydride eingesetzt werden. Im Folgenden ist der Begriff Dicarbonsäure daher so zu verstehen, dass ebenfalls das korrespondierende Anhydrid eingeschlossen ist. Es gehört zum allgemeinen Wissen des Durchschnittsfachmanns zu entscheiden, die entsprechenden Verbindungen entweder als Dicarbonsäure oder als Anhydrid einzusetzen.

Dicarbonsäuren

Bei den erfindungsgemäß einzusetzenden Dicarbonsäuren kann es sich um aromatische oder aliphatische Verbindungen handeln. Bei aliphatischen Verbindungen handelt es sich um solche, die keine aromatischen Gruppen, wie beispielsweise einen Benzolrest enthalten. Als aromatische Verbindung im Sinne der vorliegenden Verbindung werden all jene verstanden, die mindestens eine aromatische Gruppe, wie beispielsweise einen Benzolrest enthalten. Als Beispiel für eine aromatische Verbindung seien beispielsweise die dem Fachmann bekannten Konstitutionsisomere der Benzoldicarbonsäure sowie Terephthalsäureanhydrid genannt.

Bevorzugt sind aliphatische Dicarbonsäuren. Besonders bevorzugt sind die besagten aliphatischen Dicarbonsäuren gesättigt oder einfach oder mehrfach ungesättigt. Ganz besonders bevorzugt handelt es sich um lineare aliphatische Dicarbonsäuren, die entweder gesättigt oder einfach oder mehrfach ungesättigt sind. Daneben können auch cycloaliphatische Dicarbonsäuren eingesetzt werden.

Es ist weiterhin bevorzugt, dass mindestens eine gesättigte und mindestens eine einfach oder mehrfach ungesättigte aliphatische Dicarbonsäure eingesetzt werden. Besonders bevorzugt werden mindestens eine gesättigte

lineare aliphatische Dicarbonsäure und mindestens eine einfach oder mehrfach ungesättigte lineare aliphatische Dicarbonsäure eingesetzt.

Besonders bevorzugt werden mindestens eine gesättigte und mindestens eine einfach oder mehrfach ungesättigte aliphatische Dicarbonsäure eingesetzt. Ganz besonders bevorzugt werden mindestens eine gesättigte lineare und mindestens eine einfach oder mehrfach ungesättigte lineare aliphatische Dicarbonsäure eingesetzt.

Bevorzugt beträgt das molare Verhältnis von gesättigten zu einfach und/oder mehrfach ungesättigten aliphatischen Dicarbonsäuren 0,5 : 1,5 bis 1,5 : 0,5, besonders bevorzugt 0,75 : 1,25 bis 1,25 : 0,75 und ganz besonders bevorzugt 0,9 : 1,1 bis 1,1 : 0,9. Die genannten Verhältnisse beziehen sich sowohl auf den Fall, dass mehr als eine gesättigte und/oder mehr als eine ungesättigte Dicarbonsäure eingesetzt werden, als auch auf den Fall, dass genau eine gesättigte und genau eine ungesättigte Dicarbonsäure eingesetzt werden.

Als gesättigte aliphatische Dicarbonsäuren werden bevorzugt solche mit 4 bis 18, besonders bevorzugt 6 bis 14 und ganz besonders bevorzugt 6 bis 10 Kohlenstoffatomen eingesetzt. Besonders bevorzugt handelt es sich hierbei um lineare gesättigte aliphatische Dicarbonsäuren.

Als einfach ungesättigte aliphatische Dicarbonsäuren werden bevorzugt solche mit 4 bis 10, besonders bevorzugt 4 bis 8 und ganz besonders bevorzugt 4 bis 6 Kohlenstoffatomen eingesetzt. Besonders bevorzugt handelt es sich hier um entsprechende ungesättigte lineare aliphatische Dicarbonsäuren.

Als mehrfach ungesättigte aliphatische Dicarbonsäuren werden bevorzugt solche mit 6 bis 18, besonders bevorzugt 8 bis 16 und ganz besonders bevorzugt 10 bis 14 Kohlenstoffatomen eingesetzt. Besonders bevorzugt handelt es sich hier um entsprechende mehrfach ungesättigte lineare aliphatische Dicarbonsäuren.

Beispielsweise handelt es sich bei den gesättigten aliphatischen Dicarbonsäuren um Alkandisäuren. Bevorzugt werden gesättigte Alkandisäuren eingesetzt, welche 4 bis 18, besonders bevorzugt 6 bis 14 und ganz besonders bevorzugt 6 bis 10 Kohlenstoffatome enthalten. Besonders bevorzugt handelt es sich hier um gesättigte lineare Alkandisäuren welche 4 bis 18, besonders bevorzugt 6 bis 14 und ganz besonders bevorzugt 6 bis 10 Kohlenstoffatome enthalten. Geeignete Alkandisäuren sind zum Beispiel Bernsteinsäure, Glutarsäure, Adipinsäure, Pimelinsäure, Korksäure, Azelainsäure, Sebacinsäure, Undecandisäure, Dodecandisäure, Tridecandisäure, Tetradecandisäure und Hexadecandisäure sowie deren Anhydride, insoweit diese existieren.

Als einfach ungesättigte aliphatische Dicarbonsäuren können Alkendisäuren eingesetzt werden, welche 4 bis 10, besonders bevorzugt 4 bis 8 und ganz besonders bevorzugt 4 bis 6 Kohlenstoffatome enthalten. Bevorzugt handelt es sich hier um entsprechende einfach ungesättigte lineare Alkendisäuren. Eine geeignete einfach ungesättigte lineare Alkendisäuren ist beispielsweise Maleinsäure.

**Diole**

Bei den bevorzugt einzusetzenden Diolen kann es sich um aromatische oder aliphatische Verbindungen handeln. Bevorzugt sind aliphatische Diole. Besonders bevorzugt handelt es sich um lineare oder cyclische aliphatische Diole. Diese können sowohl gesättigt als auch einfach oder mehrfach ungesättigt sein. Bevorzugt handelt es sich um gesättigte lineare oder gesättigte cyclische aliphatische Diole.

Es können beispielsweise gesättigte aliphatische Diole mit 4 bis 18, besonders bevorzugt 6 bis 14 und ganz besonders bevorzugt 6 bis 10 Kohlenstoffatomen eingesetzt werden. Bevorzugt handelt es sich hierbei um entsprechende gesättigte lineare oder gesättigte cyclische aliphatische Diole.

Bevorzugt werden gesättigte Alkandiole oder gesättigte Cycloalkandiole eingesetzt. Bei letztgenannten kann es sich um Monocycloalkandiole, Bicycloalkandiole oder Tricycloalkandiole handeln.

Es können beispielsweise gesättigte Alkandiole mit 4 bis 18, besonders bevorzugt 6 bis 14 und ganz besonders bevorzugt 6 bis 10 Kohlenstoffatomen eingesetzt werden. Bevorzugt handelt es sich hier um entsprechende gesättigte lineare Alkandiole. Geeignete gesättigte Alkandiole sind zum Beispiel 1,4-Butandiol und 1,6-Hexandiol.

Ebenso können bevorzugt gesättigte cyclische aliphatische Diole mit 6 bis 18, besonders bevorzugt 6 bis 14 und ganz besonders bevorzugt 6 bis 10 Kohlenstoffatomen eingesetzt werden.

Es können bevorzugt gesättigte Cycloalkandiole mit 6 bis 18, besonders bevorzugt 6 bis 14 und ganz besonders bevorzugt 6 bis 10 Kohlenstoffatomen eingesetzt werden. Ganz besonders bevorzugt einzusetzende gesättigte Cyclolakandiole sind Tricyclodecandiol, Cyclohexyldimethanol und Tetramethylcyclobutandiol.

Es ist weiterhin bevorzugt, dass mindestens ein lineares aliphatisches Diol eingesetzt wird. Es ist ebenfalls bevorzugt, dass mindestens ein lineares aliphatisches Diol und ein cyclisches aliphatisches Diol eingesetzt werden. Das molare Verhältnis zwischen dem linearen aliphatischen und dem cyclischen aliphatischen Diol beträgt dann bevorzugt 0,5 : 1,5 bis 1,5 : 0,5, besonders bevorzugt 0,75 : 1,25 bis 1,25 : 0,75 und ganz besonders bevorzugt 0,9 : 1,1 bis 1,1 : 0,9.

Zur Herstellung des alpha,omega-hydroxyfunktionalisierten Oligoesters wird ein Überschuss an Diolen eingesetzt. Das molare Verhältnis von Dicarbonsäuren zu den Diolen ist dann beispielsweise n : (n + 1,1) bis n : (n + 2), bevorzugt n : (n + 1,2) bis n : (n + 1,8), besonders bevorzugt n : (n + 1,3) bis n : (n + 1,6) und ganz besonders bevorzugt

n : (n + 1,3) bis n : (n + 1,5), wobei n die Stoffmenge der Dicarbonsäure bezeichnet.

Die Herstellung des alpha,omega-hydroxyfunktionalisierten Oligoesters erfolgt in einer dem Fachmann geläufigen Art und Weise. Um eine quantitative Umsetzung der eingesetzten Edukte zu erzielen, muss das bei der Reaktion entstehende Wasser aus dem chemischen Gleichgewicht entzogen werden. Dies geschieht vornehmlich durch den Einsatz eines Wasserabscheiders. Der alpha,omega-hydroxyfunktionalisierte Oligoester ist folglich ein Polykondensationsprodukt. Demnach handelt es sich bei dem alpha,omega-hydroxyfunktionalisierten Oligoester um ein Gemisch aus entsprechenden Oligoestern unterschiedlicher Kettenlänge.

In einer bevorzugten Ausführungsform des erfindungsgemäß einzusetzenden alpha,omega-hydroxyfunktionalisierten Oligoesters wird zu dessen Herstellung mindestens eine gesättigte lineare aliphatische Dicarbonsäure, mindestens eine einfach ungesättigte lineare aliphatische Dicarbonsäure und mindestens ein gesättigtes aliphatisches Diol eingesetzt. Bevorzugt handelt es sich bei der einzusetzenden gesättigten linearen aliphatischen Dicarbonsäure um eine lineare Alkandisäure mit 4 bis 18, besonders bevorzugt 6 bis 14 und ganz besonders bevorzugt 6 bis 10 Kohlenstoffatomen. Bei der einfach ungesättigten linearen Dicarbonsäure handelt es sich bevorzugt um eine einfach ungesättigte lineare Alkendisäure mit 4 bis 10, besonders bevorzugt 4 bis 8 und ganz besonders bevorzugt 4 bis 6 Kohlenstoffatomen. Bei dem gesättigten aliphatischen Diol handelt es sich bevorzugt um gesättigte lineare Alkandiole mit 4 bis 18, besonders bevorzugt 6 bis 14 und ganz besonders bevorzugt 6 bis 10 Kohlenstoffatomen oder ebenfalls bevorzugt um gesättigte Cycloalkandiole mit 6 bis 18, besonders bevorzugt 6 bis 14 und ganz besonders bevorzugt 6 bis 10 Kohlenstoffatomen.

Darüber hinaus lassen sich bei der Herstellung des alpha,omegahydroxyfunktionalisierten Oligoesters natürlich auch Triole und monohydroxyfunktionelle Verbindungen einsetzen. Beispielsweise können aliphatische Triole sowie aliphatische monohydroxyfunktionelle Verbindungen eingesetzt werden. Bevorzugt handelt es sich dabei um entsprechende aliphatische Kohlenwasserstoffverbindungen. Als Beispiel für ein Triol sei Trimethylolpropan genannt. Als monohydroxyfunktionelle Verbindungen kann beispielsweise Dodecanol eingesetzt werden.

In einer weiteren bevorzugten Ausführungsform besitzt der alpha,omegahydroxyfunktionalisierte Oligoester die folgende Strukturformel (I):

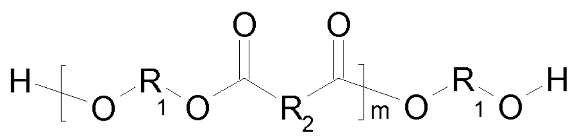

(I)

wobei

- die (m + 1) Reste $R_1$ unabhängig voneinander ausgewählt sind aus der Gruppe der linearen oder cyclischen Alkylenreste,
- die m Reste $R_2$ unabhängig voneinander ausgewählt sind aus der Gruppe der Alkylen- und Alkenylenreste, wobei das Verhältnis von Alkylen- zu Alkenylenresten gerade so gewählt ist, dass der besagte alpha,omega-hydroxyfunktionalisierte Oligoester der Strukturformel (I) einen theoretischen Kohlenstoff-Kohlenstoff-Doppelbindungsgehalt von 1 bis 3 mmol/g besitzt, und
- der Index m so gewählt ist, dass das zahlenmittlere Molekulargewicht des besagten alpha,omega-hydroxyfunktionalisierten Oligoesters der Strukturformel (I) 1000 bis 3000 g/mol beträgt,

Bei dem Index m in der Strukturformel (I) handelt es sich um eine ganze Zahl.

Die Voraussetzung, dass der Index m so gewählt werde, dass das zahlenmittlere Molekulargewicht des besagten alpha,omega-hydroxyfunktionalisierten Oligoesters der Strukturformel (I) 1000 bis 3000 g/mol betrage sei im Folgenden erklärt. Es soll angenommen werden, dass es sich bei allen (m + 1) Resten $R_1$ um einen Hexamethylenrest und bei der Hälfte aller m Reste $R_2$ jeweils um einen Tetramethylenrest und bei der anderen Hälfte jeweils um einen Rest der Formel - CH=CH- handelt. Beträgt das zahlenmittlere Molekulargewicht beispielsweise 1500 g/mol, so liegt m im Mittel zwischen 6 und 7.

Das zahlenmittlere Molekulargewicht des alpha,omega-hydroxyfunktionalisierten Oligoesters der Strukturformel (I) beträgt bevorzugt 1000 bis 2800 g/mol und besonders bevorzugt 1200 bis 2600 g/mol.

Das gewichtsmittlere Molekulargewicht des alpha,omega-hydroxyfunktionalisierten Oligoesters der Strukturformel (I) beträgt bevorzugt 3000 bis 8000 g/mol und besonders bevorzugt 3000 bis 7500 g/mol.

Der alpha,omega-hydroxyfunktionalisierte Oligoester der Strukturformel (I) besitzt bevorzugt eine OH-Zahl von 40 bis 160 mg KOH/g und besonders bevorzugt von 70 bis 150 mg KOH/g.

Der alpha,omega-hydroxyfunktionalisierte Oligoester der Strukturformel (I) besitz bevorzugt einen theoretischen Kohlenstoff-Kohlenstoff-Doppelbindungsgehalt von 1,4 bis 2,5 mmol/g und besonders bevorzugt von 1,6 bis 2,3 mmol/g.

Der alpha,omega-hydroxyfunktionalisierte Oligoester der Strukturformel (I) besitzt eine Säurezahl von 0 bis 10 mg KOH/g, besonders bevorzugt von 0 bis 5 mg KOH/g und ganz besonders bevorzugt von 0 bis 3 mg KOH/g. Theoretisch beträgt die Säurezahl des alpha,omega-hydroxyfunktionalisierten Oligoesters der Strukturformel (I) 0 mg KOH/g. Wird dieser aus entsprechenden Diolen sowie entsprechenden Dicarbonsäuren beziehungsweise deren Anhydriden hergestellt, so ist es grundsätzlich möglich, dass Carbonsäuregruppe vorliegen, welche nicht mit einem entsprechenden Diol reagiert haben. In einem solchen Fall, hätte das resultierende Produktgemisch eine Säurezahl von > 0 mg KOH/g. Gemäß den oben genannten Bereichen für die Säurezahl ist es bevorzugt, wenn das resultierende Reaktionsgemisch möglichst wenig Carbonsäuregruppen besitzt.

Die (m + 1) Reste $R^1$ sind unabhängig voneinander ausgewählt aus der Gruppe der linearen oder cyclischen Alkylenreste. Ist mehr als eine Art von Resten $R_1$ im alpha,omega-hydroxyfunktionalisierten Oligoester der Strukturformel (I) vorhanden, so ist deren Anordnung statistisch. Im Fall eines linearen Alkylenrestes enthält dieser bevorzugt 4 bis 18, besonders bevorzugt 6 bis 14 und ganz besonders bevorzugt 6 bis 10 Kohlenstoffatome. Ganz besonders bevorzugt handelt es sich hier um einen Hexamethylenrest. Im Falle eines cyclischen Alkylenrests enthält dieser bevorzugt 6 bis 18, besonders bevorzugt 6 bis 14 und ganz besonders bevorzugt 6 bis 10 Kohlenstoffatome. Ganz besonders bevorzugt handelt es sich hier um einen Tricyclodecanrest.

Es ist bevorzugt, dass in dem alpha,omega-hydroxyfunktionalisierten Oligoester der Strukturformel (I) genau eine Art von Resten $R_1$, also entweder ein linearer oder ein cyclischer Alkylenrest, vorhanden sind. Es ist ebenfalls bevorzugt, dass genau zwei Arten von Resten $R_1$, nämlich lineare und cyclische Alkylenreste vorhanden sind. Das molare Verhältnis zwischen den linearen und den cyclischen Alkylenresten beträgt dann bevorzugt 0,5 : 1,5 bis 1,5 : 0,5, besonders bevorzugt 0,75 : 1,25 bis 1,25 zu 0,75 und ganz besonders bevorzugt 0,9 : 1,1 bis 1,1 : 0,9.

Die m Reste $R_2$ sind unabhängig voneinander ausgewählt aus der Gruppe der Alkylen- und Alkenylenreste, wobei das Verhältnis von Alkylen- zu Alkenylenresten gerade so gewählt ist, dass der besagte alpha,omega-hydroxyfunktionalisierte Oligoester der Strukturformel (I) einen theoretischen Kohlenstoff-Kohlenstoff-Doppelbindungsgehalt von 1 bis 3 mmol/g, bevorzugt von 1,4 bis 2,5 mmol/g und ganz besonders bevorzugt von 1,6 bis 2,3 mmol/g besitzt. Die Anordnung der unterschiedlichen Arten von Resten $R_2$ im alpha,omega-hydroxyfunktionalisierten Oligoester der Strukturformel (I) ist statistisch.

Bei $R_2$ handelt es sich bevorzugt entweder um einen linearen Alkylen- oder einen linearen Alkenylenrest. Es ist ebenfalls bevorzugt, dass das molare Verhältnis zwischen den Alkylen- und den Alkenylenresten 0,5 : 1,5 bis 1,5 : 0,5, besonders bevorzugt 0,75 : 1,25 bis 1,25 zu 0,75 und ganz besonders bevorzugt 0,9 : 1,1 bis 1,1 : 0,9 beträgt.

Ist $R_2$ ein linearer Alkylenrest, so enthält dieser bevorzugt 2 bis 16, besonders bevorzugt 4 bis 12 uns ganz besonders bevorzugt 4 bis 8 Kohlenstoffatome. Beispielsweise handelt es sich um einen Tetramethylenrest.

$R_2$ kann weiterhin ein linearer Alkenylenrest sein. Bevorzugt handelt es sich um einen einfach ungesättigten linearen Alkenylenrest, welcher bevorzugt 2 bis 8, besonders bevorzugt 2 bis 6 und ganz besonders bevorzugt 2 bis 4 Kohlenstoffatome enthält. Ganz besonders bevorzugt handelt es sich um einen Alkenylenrest der Struktur -CH=CH-.

Es ist ferner bevorzugt, dass alle Alkylen- und alle Alkenylenreste gleich sind. Hierunter ist zu verstehen, dass in dem besagten alpha,omega-hydroxyfunktionalisierten Oligoester bezüglich des Restes $R_2$ jeweils nur eine Art von Alkylenresten und nur eine Art von Alkenylenresten vorhanden ist.

Besonders bevorzugte Ausführungsformen werden im Folgenden genannt:

a) In einer besonders bevorzugten Ausführungsform des alpha,omega-hydroxyfunktionalisierten Oligoesters der Strukturformel (I) besitzt dieser ein zahlenmittleres Molekulargewicht von 1200 bis 2600 g/mol besitzt.

b) In einer weiteren besonders bevorzugten Ausführungsform des alpha,omegahydroxyfunktionalisierten Oligoesters der Strukturformel (I) besitzt dieser ein gewichtsmittleres Molekulargewicht von 3000 bis 7500 g/mol besitzt.

c) In einer weiteren besonders bevorzugten Ausführungsform des alpha,omegahydroxyfunktionalisierten Oligoesters der Strukturformel (I) besitzt dieser eine OH-Zahl von 70 bis 150 mg KOH/g besitzt.

d) In einer weiteren besonders bevorzugten Ausführungsform des alpha,omega-hydroxyfunktionalisierten Oligoesters der Strukturformel (I) besitzt dieser einen theoretischen Kohlenstoff-Kohlenstoff-Doppelbindungsgehalt von 1 bis 3 mmol/g.

e) In einer weiteren besonders bevorzugten Ausführungsform des alpha,omega-hydroxyfunktionalisierten Oligoesters der Strukturformel (I) sind die (m + 1) Reste $R_1$ ausgewählt aus der Gruppe der linearen Alkylenreste mit 6 bis 10 Kohlenstoffatomen.

f) In einer weiteren besonders bevorzugten Ausführungsform des alpha,omega-hydroxyfunktionalisierten Oligoesters der Strukturformel (I) sind die m Reste $R_2$ ausgewählt aus der Gruppe der linearen Alkylenreste mit 4 bis 8 Kohlenstoffatomen und der linearen Alkenylenreste mit 2 bis 4 Kohlenstoffatomen.

g) In einer weiteren besonders bevorzugten Ausführungsform des alpha,omega-hydroxyfunktionalisierten Oligoesters der Strukturformel (I) beträgt das molare Verhältnis zwischen den linearen Alkylen- und den linearen Alkenylenresten 0,9 : 1,1 bis 1,1 : 0,9.

In einer ganz besonders bevorzugten Ausführungsform des erfindungsgemäßen alpha,omega-hydroxyfunktionalisierten Oligoesters sind alle die unter a) bis g) angegebenen Merkmale in Kombination realisiert.

Füller

Es ist erfindungswesentlich, dass der lösemittelbasierte Füller mindestens einen erfindungsgemäß einzusetzenden alpha,omega-hydroxyfunktionalisierten Oligoester enthält. Dabei beträgt die Summe über die gewichtsprozentualen Anteile aller alpha,omega-hydroxyfunktionalisierten Oligoester 0,5 bis 9 Gew.-% bezogen auf die Gesamtmenge des lösemittelbasierten Füllers. Bevorzugt beträgt die Summe über die gewichtsprozentualen Anteile aller alpha,omega-hydroxyfunktionalisierten Oligoester 1 bis 9 Gew.-%, besonders bevorzugt 1 bis 8 Gew.-% und ganz besonders bevorzugt 1,5 bis 7,5 Gew.-% oder sogar 1,5 bis 6,5 Gew.-% jeweils bezogen auf das Gesamtgewicht des besagten Füllers.

Wird die Untergrenze von 0,5 Gew.-% unterschritten, so wird die Haftung nicht verbessert. Werden 10 Gew.-% überschritten, so treten Nachteile wie beispielsweise eine Vergilbung der resultierenden Beschichtung auf.

In dem erfindungsgemäßen lösemittelbasierten Füller beträgt die Summe über die gewichtsprozentualen Anteile aller alpha,omega-hydroxyfunktionalisierten Oligoester 0,5 bis 9 Gew.-% bezogen auf die Gesamtmenge des lösemittelbasierten Füllers. Für den Fall, dass bevorzugte Ausführungsformen der besagten alpha,omega-hydroxyfunktionalisierten Oligoester eingesetzt werden, beträgt die Summe über die gewichtsprozentualen Anteile aller bevorzugten Ausführungsformen des besagten alpha,omega-hydroxyfunktionalisierten Oligoesters bevorzugt ebenfalls 0,5 bis 9 Gew.-% bezogen auf die Gesamtmenge des lösemittelbasierten Füllers. Besonders bevorzugt enthält der erfindungsgemäße Füller als alpha,omega-hydroxyfunktionalisierten Oligoester ausschließlich bevorzugte Ausführungsformen der besagten alpha,omega-hydroxyfunktionalisierten Oligoester.

In einer bevorzugten Ausführungsform des erfindungsgemäßen lösemittelbasierten Füllers beträgt die Summe über die gewichtsprozentualen Anteile aller alpha,omega-hydroxyfunktionalisierten Oligoester 1 bis 9 Gew.-% bezogen auf die Gesamtmenge des lösemittelbasierten Füllers. Für den Fall, dass bevorzugte Ausführungsformen der besagten alpha,omega-hydroxyfunktionalisierten Oligoester eingesetzt werden, beträgt die Summe über die gewichtsprozentualen Anteile aller bevorzugten Ausführungsformen des besagten alpha,omega-hydroxyfunktionalisierten Oligoesters bevorzugt ebenfalls 1 bis 9 Gew.-% bezogen auf die Gesamtmenge des lösemittelbasierten Füllers. Besonders bevorzugt enthält der erfindungsgemäße Füller als alpha,omega-hydroxyfunktionalisierten Oligoester ausschließlich bevorzugte Ausführungsformen der besagten alpha,omega-hydroxyfunktionalisierten Oligoester.

In einer besonders bevorzugten Ausführungsform des erfindungsgemäßen lösemittelbasierten Füllers beträgt die Summe über die gewichtsprozentualen Anteile aller alpha,omega-hydroxyfunktionalisierten Oligoester 1 bis 8 Gew.-% bezogen auf die Gesamtmenge des lösemittelbasierten Füllers. Für den Fall, dass bevorzugte Ausführungsformen der besagten alpha,omega-hydroxyfunktionalisierten Oligoester eingesetzt werden, beträgt die Summe über die gewichtsprozentualen Anteile aller bevorzugten Ausführungsformen des besagten alpha,omega-hydroxyfunktionalisierten Oligoesters bevorzugt ebenfalls 1 bis 8 Gew.-% bezogen auf die Gesamtmenge des lösemittelbasierten Füllers. Besonders bevorzugt enthält der erfindungsgemäße Füller als alpha,omega-hydroxyfunktionalisierten Oligoester ausschließlich bevorzugte Ausführungsformen der besagten alpha,omega-hydroxyfunktionalisierten Oligoester.

In einer ganz besonders bevorzugten Ausführungsform des erfindungsgemäßen lösemittelbasierten Füllers beträgt die Summe über die gewichtsprozentualen Anteile aller alpha,omega-hydroxyfunktionalisierten Oligoester 1,5 bis 7,5 Gew.-% bezogen auf die Gesamtmenge des lösemittelbasierten Füllers. Für den Fall, dass bevorzugte Ausführungsformen der besagten alpha,omega-hydroxyfunktionalisierten Oligoester eingesetzt werden, beträgt die Summe über die gewichtsprozentualen Anteile aller bevorzugten Ausführungsformen des besagten alpha,omega-hydroxyfunktionalisierten Oligoesters bevorzugt ebenfalls 1,5 bis 7,5 Gew.-% bezogen auf die Gesamtmenge des lösemittelbasierten Füllers. Besonders bevorzugt enthält der erfindungsgemäße Füller als alpha,omega-hydroxyfunktionalisierten Oligoester ausschließlich bevorzugte Ausführungsformen der besagten alpha,omega-hydroxyfunktionalisierten Oligoester.

In einer ebenfalls ganz besonders bevorzugten Ausführungsform des erfindungsgemäßen lösemittelbasierten Füllers beträgt die Summe über die gewichtsprozentualen Anteile aller alpha,omega-hydroxyfunktionalisierten Oligoester 1,5 bis 6,5 Gew.-% bezogen auf die Gesamtmenge des lösemittelbasierten Füllers. Für den Fall, dass bevorzugte Ausführungsformen der besagten alpha,omega-hydroxyfunktionalisierten Oligoester eingesetzt werden, beträgt die Summe über die gewichtsprozentualen Anteile aller bevorzugten Ausführungsformen des besagten alpha,omega-hydroxyfunktionalisierten Oligoesters bevorzugt ebenfalls 1,5 bis 6,5 Gew.-% bezogen auf die Gesamtmenge des lösemittelbasierten Füllers. Besonders bevorzugt enthält der erfindungsgemäße Füller als alpha,omega-hydroxyfunktionalisierten Oligoester ausschließlich bevorzugte Ausführungsformen der besagten alpha,omega-hydroxyfunktionalisierten Oligoester.

Als Beispiel für in diesem Sinne bevorzugte Ausführungsformen des alpha,omega-hydroxyfunktionalisierten Oligoesters, sei der alpha,omega-hydroxyfunktionalisierte Oligoester gemäß Strukturformel (I) genannt.

Als weitere Beispiele für in diesem Sinne bevorzugte Ausführungsformen des erfindungsgemäßen alpha,omega-hydroxyfunktionalisierten Oligoesters seien die folgenden besonders bevorzugten Ausführungsformen genannt:

a) In einer bevorzugten Ausführungsform des alpha,omega-hydroxyfunktionalisierten Oligoesters der Strukturformel (I) besitzt dieser ein zahlenmittleres Molekulargewicht von 1200 bis 2600 g/mol besitzt.
b) In einer weiteren bevorzugten Ausführungsform des alpha,omega-hydroxyfunktionalisierten Oligoesters der Strukturformel (I) besitzt dieser ein gewichtsmittleres Molekulargewicht von 3000 bis 7500 g/mol besitzt.
c) In einer weiteren bevorzugten Ausführungsform des alpha,omega-hydroxyfunktionalisierten Oligoesters der Strukturformel (I) besitzt dieser eine OH-Zahl von 70 bis 150 mg KOH/g besitzt.
d) In einer weiteren bevorzugten Ausführungsform des alpha,omega-hydroxyfunktionalisierten Oligoesters der Strukturformel (I) besitzt dieser einen theoretischen Kohlenstoff-Kohlenstoff-Doppelbindungsgehalt von 1 bis 3 mmol/g.
e) In einer weiteren bevorzugten Ausführungsform des alpha,omega-hydroxyfunktionalisierten Oligoesters der Strukturformel (I) sind die (m + 1) Reste $R_1$ ausgewählt aus der Gruppe der linearen Alkylenreste mit 6 bis 10 Kohlenstoffatomen.
f) In einer weiteren bevorzugten Ausführungsform des alpha,omega-hydroxyfunktionalisierten Oligoesters der Strukturformel (I) sind die m Reste $R_2$ ausgewählt aus der Gruppe der linearen Alkylenreste mit 4 bis 8 Kohlenstoffatomen und der linearen Alkenylenreste mit 2 bis 4 Kohlenstoffatomen.
g) In einer weiteren bevorzugten Ausführungsform des alpha,omega-hydroxyfunktionalisierten Oligoesters der Strukturformel (I) beträgt das molare Verhältnis zwischen den linearen Alkylen- und den linearen Alkenylenresten 0,9 : 1,1 bis 1,1 : 0,9.

Als eine in diesem Sinne ebenfalls bevorzugte Ausführungsform des alpha,omega-hydroxyfunktionalisierten Oligoesters sei jene genannt, welche alle die unter a) bis g) angegebenen Merkmale in Kombination realisiert.

Der Festkörpergehalt des Füllers kann bestimmt werden, indem ca. 2 g Probe in eine vorher getrocknete Aluminiumschale eingewogen und 60 Minuten bei 125 °C im Trockenschrank getrocknet, im Exsikkator abgekühlt, und dann zurückgewogen werden. Der Rückstand bezogen auf die Gesamtmenge der eingesetzten Probe entspricht dem Festkörperanteil. Die Bestimmung des Festkörpers erfolgte nach EN ISO 3251 (1-2 g 1h 125°C).

Es können die dem Fachmann geläufigen lösemittelbasierten Füller eingesetzt werden. Der besagte Füller enthält mindestens ein organisches Polymer als Bindemittel. Diese organischen Polymere sind beispielsweise die dem Fachmann bekannten Polyester- und/oder Polyacrylat- und Polymethacrylatharze (im Folgenden als Poly(meth)acrylatharze bezeichnet). Die genannten organischen Polymere als Bindemittel enthalten vorzugsweise zusätzlich unterschiedliche funktionelle Gruppen zur chemischen Vernetzung, wobei Hydroxylgruppen bevorzugt sind. Bevorzugt werden Polyester- und/oder Poly(meth)acrylatharze, welche bevorzugt Hydroxylgruppen enthalten, als Bindemittel eingesetzt. Solche organischen Polymere beziehungsweise Harze werden beispielsweise im Römpp-Lexikon Lacke und Druckfarben, Georg Thieme Verlag, Stuttgart, New York, 1998, Seiten 73 bis 74, beschrieben. Polyester ergeben besonders flexible Füller. Poly(meth)acrylatharze werden bevorzugt, weil sie schneller physikalisch trocknen und letztlich eine frühere Bearbeitung zulassen. Daneben können auch noch Epoxidharze eingesetzt werden. Diese werden beispielsweise im Römpp-Lexikon Lacke und Druckfarben, Georg Thieme Verlag, Stuttgart, New York, 1998, Seiten 196 bis 197, beschrieben. Ein in diesem Sinne bevorzugt einzusetzendes Epoxidharz ist Epikot 1001.

Als Vernetzter können Polyisocyanataddukte eingesetzt werden. Als Polyisocyanataddukte werden wegen ihrer niedrigen Viskosität und der besseren Wetterbeständigkeit aliphatische und auch cycloaliphatische Polyisocyanataddukte verwendet. Das sind Produkte, die auch bei den Zweikomponenten-Klarlacken der Automobil-Serienlackierung eingesetzt werden. Bei den eingesetzten Polyisocyanataddukten handelt es sich üblicherweise um Oligomere aus Diisocyanaten. Basis für die besagten Polyisocyanataddukte sind beispielsweise Hexamethylendiisocyanat (HMDI), Isophorondiisocyanat (IPDI), Diphenylmethandiisocyanat (MDI) und Tetramethylxylyldiisocyanat (TMXDI). Daneben können aber auch alle gängigen dem Fachmann bekannten Diisocyanate eingesetzt werden. Die Verfahren zur Oligomerisierung bestehen in der Bildung verschiedener Addukte: Urethanen, Allophananten, Biuret, Uretdionen und bevorzugt Isocyanuraten. Besonders bevorzugt werden wegen ihrer Viskosität Isocyanurattrimere des Hexamethylendiisocyanats eingesetzt.

Vorteilhafterweise liegt der Anteil aller filmbildenden Komponenten, insbesondere des hydroxyfunktionellen Polyester- und/oder Poly(meth)acrylatharzes und des Polyisocyanatadduktes als Vernetzers im Bereichen von 10 bis 90 Gew.-%, bevorzugt von 15 bis 60 Gew.-%, besonders bevorzugt im Bereich von 20 bis 50 Gew.-%, jeweils bezogen auf die Gesamtmenge des lösemittelbasierten Füllers. Der Anteil eines jeweils separat betrachteten Harzes als Bindemittel sowie eines Vernetzers liegt vorteilhafterweise nicht unter 3 Gew.-%, bezogen auf die Gesamtmenge des lösemittelbasierten Füllers.

Üblicherweise ist es erforderlich, die Vernetzungsreaktion zu katalysieren. Dafür werden fast immer organische Zinnsalze verwendet. Im Sinne der vorliegenden Erfindung wird bevorzugt Dibutylzinndilaurat eingesetzt, da es aufgrund seines relativ langkettigen Säurerests besonders gut mit dem Bindemittel und dann später mit der Filmmatrix verträglich ist.

Die Pigmentierung der Füller besteht üblicherweise aus Titandioxid Eisenoxidpigment und Ruß. Daneben sind geeignete Füllstoffe vorhanden. Als Füllstoffe können die üblichen in der Lackindustrie einsetzbaren Füllstoffe verwendet

werden. Füllstoffe werden beispielsweise im Römpp-Lexikon Lacke und Druckfarben, Georg Thieme Verlag, Stuttgart, New York, 1998, Seiten 250 bis 252, beschrieben. Daneben werden üblicherweise Korrosionsinhibitoren wie beispielsweise Silicate, Orthophosphate und Polyphosphate eingesetzt. Es werden nur für spezielle Fälle farbige Füller hergestellt, die den geplanten Farbton für die Decklackierung unterstützen. Normalerweise haben die Füller verschiedene Grautöne, die durch Anteile an Pigmentrußen und Eisenoxiden (meistens Eisenoxidgelb) erzeugt werden.

Des Weiteren enthält der erfindungsgemäße Füller organische Lösemittel. Enthalten sein können beispielsweise aliphatische und/oder aromatische Kohlenwasserstoffe wie Toluol, Xylol, Solventnaphtha, Solvesso 100, Shellsol A, Ketone, wie Aceton, Methylethylketon oder Methylamylketon, Ester, wie Ethylacetat, Butylacetat, Methoxypropylacetat, Butylglykolacetat , Pentylacetat oder Ethylethoxypropionat, Ether wie Butylglycol, Dipropylenglycolmethylether, Alkohole wie Ethylhexanol, Butoxypropanol, Isopropanol oder Butyldiglycol oder Mischungen aus den vorgenannten Lösemitteln.

Des Weiteren handelt es sich um einen lösemittelbasierten Füller. Unter dem Begriff "lösemittelbasiert" soll im Folgenden verstanden werden, dass als Lösemittel organische Lösemittel und kein Wasser eingesetzt wird. Insbesondere soll der Wassergehalt des erfindungsgemäßen lösemittelbasierten Füllers nicht größer als 5 Gew.-%, und ganz besonders nicht größer als 2 Gew.-% jeweils bezogen auf die Gesamtmenge des erfindungsgemäßen lösemittelbasierten Füllers betragen.

Weiterhin kann in dem besagten Füller mindestens ein an sich bekanntes Lackadditiv enthalten sein. Solche Lackadditive sind beispielsweise, aber nicht ausschließlich,

- Entschäumer,
- Polymerisationsinhibitoren,
- Slipadditive,
- Netzmittel wie Siloxane, fluorhaltige Verbindungen, Carbonsäurehalbester
- Verlaufmittel,
- rheologiesteuernde Additive,
- Dispergiermittel,
- Korrosionsschutzmittel,
- und/oder Flammschutzmittel.

Die vorliegende Erfindung betrifft weiterhin ein Verfahren zur Herstellung einer Mehrschichtlackierung auf einem Substrat, umfassend

(A) Aufbringen des erfindungsgemäßen lösemittelbasierten Füllers auf einem Substrat, woraus eine erste Lackschicht resultiert,
(B) Trocknen der in (A) aufgebrachten Schicht,
(C) Aufbringen einer Decklackschicht,
(D) gemeinsames Härten der in (A) und (C) aufgebrachten Lackschichten.

Alle oben hinsichtlich des erfindungsgemäßen lösemittelbasierten Füllers bereits diskutierten besonderen Merkmale sind ebenfalls für das in Rede stehende erfindungsgemäße Verfahren bevorzugt.

**Decklack**

Es können die dem Fachmann geläufigen lösemittelbasierten Decklacke eingesetzt werden. Der besagte Decklack enthält mindestens ein organisches Polymer als Bindemittel. Diese organischen Polymere sind beispielsweise die dem Fachmann bekannten Polyester- und/oder Polyacrylat- und Polymethacrylatharze (im Folgenden als Poly(meth)acrylatharze bezeichnet). Die genannten organischen Polymere als Bindemittel enthalten vorzugsweise zusätzlich unterschiedliche funktionelle Gruppen zur chemischen Vernetzung, wobei Hydroxygruppen bevorzugt sind. Bevorzugt werden Poly(meth)acrylatharze eingesetzt, aufgrund ihrer gegenüber Polyestern deutlich besseren Antrocknungsgeschwindigkeit. Besonders bevorzugt werden Poly(meth)acrylatharze eingesetzt, welche mit Glycidylestern verzweigter gesättigter Fettsäuren modifiziert sind. Hierdurch wird ihr Pigmentaufnahmevermögen gesteigert.

Als Vernetzer werden niedrigviskose aliphatische Polyisocyanataddukte eingesetzt, welche bereits in Zusammenhang mit der Beschreibung des erfindungsgemäßen lösemitttelbasierten Füllers diskutiert wurden. Ganz besonders bevorzugt werden hier ebenfalls Isocyanurattrimere des Hexamethylendiisocyanats eingesetzt.

Üblicherweise ist es erforderlich, die Vernetzungsreaktion zu katalysieren. Dafür werden bevorzugt organische Zinnsalze verwendet. Im Sinne der vorliegenden Erfindung wird besonders bevorzugt Dibutylzinndilaurat eingesetzt, da es aufgrund seines relativ langkettigen Säurerests besonders gut mit dem Bindemittel und dann später mit der Filmmatrix verträglich ist.

Des Weiteren enthält der besagte Decklack mindestens ein übliches und bekanntes farbgebendes und/oder effektgebendes Pigment. Als Pigmente können prinzipiell dieselben ausgewählt werden, die der Fachmann auch für die Automobilserienlackierung verwendet.

Beispiele für solche Pigmente sind Pigmente auf anorganischer Basis, wie beispielsweise Titandioxid, Eisenoxid und Ruß oder auch übliche Metallpigmente (beispielsweise handelsübliche Aluminiumbronzen, Edelstahlbronzen) und nichtmetallische Effektpigmente (beispielsweise Perlglanz- beziehungsweise Interferenzpigmente). Auch farbgebende Pigmente auf organischer Basis wie Azopigmente und Phthalocyaninpigmente können zum Einsatz kommen.

Als Lösemittel können all jene verwendet werden, welche oben bereits in Zusammenhang mit dem erfindungsgemäßen lösemittelbasierten Füller genannt worden sind.

## Substrate

Der erfindungsgemäße lösemittelbasierte Füller eignet sich bevorzugt zum Beschichten von Metallsubstraten. Geeignete Metallsubstrate sind alle dem Fachmann geläufigen wie beispielsweise Aluminium, Eisen, Zink und Magnesium sowie deren Legierungen. Besonders bevorzugt sind Substrate aus Aluminium oder Stahl.

Je nach Material können die Metallsubstrate noch mit einer Elektrotauchlackierung versehen werden; beispielsweise im Fall von Stahl. Wird hingegen ein Aluminiumsubstrat verwendet, so wird dieses vorzugweise nicht mit einer Elektrotauchlackierung versehen, sondern vor der Applikation des Füllers abgeschliffen.
Neben metallischen Substraten können auch alle üblichen dem Fachmann bekannten thermo- oder duroplastischen Kunststoffsubstrate beschichtet werden.

## Herstellung der Beschichtungen

Üblicherweise liegen vor der Applikation des Füllers jeweils eine Härter- eine Füller- und eine Verdünnungskomponente vor. Dabei enthält die Härterkomponente das Vernetzungsmittel, die Füllerkomponente das Bindemittel sowie entsprechende Pigmente und Füllstoffe und die Verdünnungskomponente entsprechende Lösemittel. Kurz vor der Applikation werden diese drei Komponenten in einem dem Fachmann geläufigen Verhältnis miteinander gemischt und der resultierende Füller appliziert. Es können grundsätzlich alle üblichen Applikationsmethoden wie beispielsweise Spritzen, Rakeln, Streichen, Giessen, Tauchen, Tränken, Träufeln oder Walzen eingesetzt werden. Bevorzugt ist die Spritzapplikation.

Dabei kann das zu beschichtende Substrat als solches ruhen, wobei die Applikationseinrichtung oder -anlage bewegt wird. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heissspritzapplikation wie zum Beispiel Hot-Air-Heissspritzen.

Welche Form der oben genannten Applikationsmethoden eingesetzt wird hängt unter anderem auch davon ab, ob der erfindungsgemäße lösemittelbasierte Füller beispielsweise in der Reparaturlackierung oder im Bereich der Lackierung von Nutzfahrzeugen eingesetzt wird.

Die Applikation des erfindungsgemäßen lösemittelbasierten Füllers erfolgt in den üblichen und bekannten Schichtdicken, beispielsweise in Nassfilmschichtdicken von 10 bis 400 Mikrometer, vorzugsweise von 80 bis 250 Mikrometer. Die dabei resultierenden Trockenfilmschichtdicken nach der Härtung liegen dann beispielsweise im Bereich von 20 bis 100 Mikrometer, insbesondere 40 bis 80 Mikrometer.

Üblicherweise wird auf der applizierten Füllerschicht eine Decklackschicht aufgebracht. Bevorzugt wird die Füllerschicht vor der Applikation des Decklacks getrocknet. Dies kann beispielsweise bei Raumtemperatur für 5 bis 90 Minuten, bevorzugt 10 bis 70 Minuten und ganz besonders bevorzugt bei 20 bis 50 Minuten erfolgen.

Die generellen Applikationsmethoden des Decklacks entsprechen denen, wie sie weiter oben für den erfindungsgemäßen lösemittelbasierten Füller beschrieben wurden.

Die Applikation des Decklacks erfolgt in den üblichen und bekannten Schichtdicken, beispielsweise in Nassfilmschichtdicken von 10 bis 350 Mikrometer, vorzugsweise von 100 bis 250 Mikrometer. Die dabei resultierenden Trockenfilmschichtdicken nach der Härtung liegen dann beispielsweise im Bereich von 15 bis 95 Mikrometer, insbesondere 30 bis 80 Mikrometer. Besonders bevorzugt besitzt die Füllerschicht nach der Härtung eine Trockenfilmschichtdicke von 60 bis 70 Mikrometer und die Decklackschicht eine Trockenfilmschichtdicke von 40 bis 70 Mikrometer.

Die Härtung von Füller und Decklack erfolgt gemeinsam. Diese weist keine methodischen Besonderheiten auf, sondern erfolgt nach den üblichen und bekannten Methoden wie beispielsweise Erhitzen in einem Umluftofen.

So kann die Härtung zum Beispiel im Bereich der Raumtemperatur oder auch bei erhöhten Temperaturen im Bereich von beispielsweise 40°C bis 100°C, bevorzugt von 50°C bis 90°C erfolgen. Beispielsweise kann die Härtung über einen Zeitraum von 5 bis 120 Minuten, bevorzugt 10 bis 40 Minuten, erfolgen. Der Härtung kann gegebenenfalls auch eine Ablüft- beziehungsweise Vortrocknungsphase vorausgehen, beispielsweise bei Raumtemperatur für eine Zeitdauer von 1 bis 60 Minuten.

Die mit Hilfe des erfindungsgemäßen lösemittelbasierten Füllers hergestellten Mehrschichtlackierungen weisen eine ausgezeichnete Haftung zwischen Füller- und Decklackschicht auf. Wird die resultierende Beschichtung beispielsweise einer Bewitterung ausgesetzt, so ist nach einer entsprechenden Regenerationszeit keine signifikante Verschlechterung der Haftung zwischen Füller- und Decklackschicht konstatierbar. Darüber hinaus weisen die erfindungsgemäßen lösemittelbasierten Füller eine hervorragende Lagerstabilität auf.

Die erfindungsgemäßen Füller eigen sich insbesondere für eine Anwendung in der Lackierung von Nutzfahrzeugen sowie der Reparaturlackierung, insbesondere der Reparaturlackierung von Nutzfahrzeugen.

Die vorliegende Erfindung betrifft weiterhin eine Mehrschichtlackierung auf einem Substrat, umfassend in dieser Reihenfolge übereinanderliegend

(A) mindestens eine erste Lackschicht, welche aus der Applikation des erfindungsgemäßen lösemittelbasierten Füllers resultiert, und
(B) mindestens eine Decklackschicht.

Als Substrat können beispielsweise alle vorstehend genannten verwendet werden. Alle oben hinsichtlich des erfindungsgemäßen lösemittelbasierten Füllers bereits diskutierten besonderen Merkmale sind ebenfalls für die erfindungsgemäße Mehrschichtlackierung bevorzugt. Die Zusammensetzung eines entsprechend einzusetzenden Decklacks ist oben bereits beschrieben worden. Die Herstellung der erfindungsgemäßen Mehrschichtlackierung kann wie oben bereits beschrieben erfolgen.

Die vorliegende Erfindung betrifft schließlich auch die Verwendung mindestens eines alpha,omega-hydroxyfunktionalisierten Oligoesters zur Haftungsverbesserung in einem lösemittelbasierten Füller, wobei der besagte alpha,omega-hydroxyfunktionalisierte Oligoester eine OH-Zahl von 30 bis 160 mg KOH/g, einen theoretischen Kohlenstoff-Kohlenstoff-Doppelbindungsgehalt von 1 bis 3 mmol/g, ein zahlenmittleres Molekulargewicht von 1000 bis 3000 g/mol und ein gewichtsmittleres Molekulargewicht von 2800 bis 10000 g/mol besitzt und wobei zudem die Summe über die gewichtsprozentualen Anteile aller alpha,omega-hydroxyfunktionalisierten Oligoester 0,5 bis 10 Gew.-% bezogen auf die Gesamtmenge des lösemittelbasierten Füllers beträgt.

Alle oben hinsichtlich des erfindungsgemäßen lösemittelbasierten Füllers bereits diskutierten besonderen Merkmale sind ebenfalls für die in Rede stehende erfindungsgemäße Verwendung bevorzugt.

Unter Haftungsverbesserung ist eine Verbesserung der Haftung im Vergleich zu solchen Füllern zu verstehen, welche keinen erfindungsgemäßen alpha,omegahydroxyfunktionalisierten Oligoester enthalten.

Die Haftung lässt sich beispielsweise mit Hilfe des Gitterschnitts nach DIN 2409 oder des Dampfstrahltests nach DIN EN ISO 66552 bestimmen. Bevorzugt wird der erfindungsgemäße alpha,omega-hydroxyfunktionalisierte Oligoester zur Verbesserung der Haftung zwischen Füller- und Decklackschicht eingesetzt. Ebenfalls bevorzugt wird der erfindungsgemäße alpha,omegahydroxyfunktionalisierte Oligoester zur Verbesserung der Haftung zwischen Füller- und Decklackschicht nach einer Bewitterung eingesetzt. Eine solche Bewitterung lässt sich beispielweise durch den Konstant-Klima-Test gemäß der DIN EN ISO 6270-2 CH simulieren.

Bevorzugt wird der besagte alpha,omega-hydroxyfunktionalisierte Oligoester zur Verbesserung der Haftung in der Reparaturlackierung oder der Lackierung von Nutzfahrzeugen eingesetzt. Ebenso kann der besagte alpha,omegahydroxyfunktionalisierte Oligoester zur Verbesserung der Haftung in der Reparaturlackierung von Nutzfahrzeugen eingesetzt werden.

Unter dem Begriff Reparaturlackierung ist unter anderem die Reparaturlackierung zu verstehen, welche beispielsweise in einer Werkstatt zur Ausbesserung von beschädigten Altlackierungen stattfindet. Fehlstellen in Lacken können grundsätzlich auch direkt nach erfolgter OEM-Lackierung auftreten. Man spricht dann von OEM-Reparaturlackierung. Die erfindungsgemäßen Füller können ebenfalls in der OEM-Reparaturlackierung eingesetzt werden. In beiden Fällen eignen sich die erfindungsgemäßen Füller auch zur Ausbesserung von kleinen Fehlstellen, den sogenannten "Spots". Ein solcher Prozess wird auch als "Spot Repair" bezeichnet.

**Messmethoden**

<u>Festkörperbestimmung:</u>

Die Festkörperbestimmung von Beschichtungszusammensetzungen erfolgt nach EN ISO 3251 (1 bis 2 g, 1 Stunde, 125 °C). Dabei werden ca. 2 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem Festkörperanteil.

Die Festkörperbestimmung der erfindungsgemäßen alpha,omegahydroxyfunktionalisierten Oligoester erfolgt nach EN ISO 3251 (1 g, 1 Stunde, 130 °C). Dabei werden 1 g Probe in eine vorher getrocknete Aluminiumschale eingewogen und 60 Minuten bei 130 °C im Trockenschrank getrocknet, im Exsikkator abgekühlt, und dann zurückgewogen. Der Rückstand bezogen auf die Gesamtmenge der eingesetzten Probe entspricht dem Festkörperanteil.

Bestimmung der Säurezahl:

Die Bestimmung der Säurezahl erfolgt gemäß DIN 53402. Dabei werden die in der Probe enthaltenden freien Säuren mit einer Kaliumhydroxid-Standardlösung in Anwesenheit eines Farbindikators titriert. Die Säurezahl entspricht der Masse an Kaliumhydroxid in mg, die zur Neutralisation von 1 g Prüfmaterial unter festgelegten Bedingungen erforderlich ist.

Bestimmung der OH-Zahl:

Die Bestimmung der OH-Zahl erfolgt nach DIN 53240. Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1g Substanz gebundenen Menge Essigsäure äquivalent ist.

Bestimmung des zahlengewichteten und des massengewichteten Molekulargewichts:

Die Bestimmung des zahlengewichteten und des massengewichteten Molekulargewichts erfolgte mittels Gelpermeationschromatographie mit Tetrahydrofuran als Elutionsmittel und unter Verwendung eines Polystyrol-Standards. Das Säulenmaterial besteht aus Styrol-Divinylbenzol-Copolymeren.

Die Erfindung wird anhand der folgenden Beispiele näher erläutert.

**Beispiele**

**1.a Darstellung des erfindungsgemäß einzusetzenden alpha,omega-hydroxyfunktionalisierten Oligoesters (A)**

Die in Tabelle 1a bezeichneten Edukte wurden wie im Folgenden dargestellt in den angegeben Stoffmengen zur Reaktion gebracht.

Zunächst wurden Maleinsäureanhydrid (MSA), Adipinsäure (AD) und 1,6-Hexandiol (HD) in einen 4-Liter-Reaktor aus rostfreiem Stahl, ausgestattet mit einer Kolonne, einem Kühler sowie einem Wasserabscheider gegeben. Anschließend erfolgte die Zugabe von 3% Xylol als Schleppmittel und 0.1% Methylhydochinon (die prozentualen Angaben beziehen sich auf die Menge des eingesetzten MSA, AD und HD). Das resultierende Reaktionsgemisch wurde innerhalb von 5 Stunden unter Magerluft aufgeheizt. Während der gesamten Reaktionszeit überschritt die Temperatur des Reaktionsgemischs 230°C nicht. Nachdem eine Säurezahl von 2 mg KOH/g erreicht worden war, wurde das Reaktionsgemisch auf 80°C abgekühlt. Der resultierende alpha,omega-hydroxyfunktionalisierte Oligoester (A) wies die folgenden Kennzahlen auf:
OH-Zahl: 65 mg KOH/g
Zahlenmittleres Molekulargewicht: 1412 g/mol
Gewichtsmittleres Molekulargewicht: 3313 g/mol
Theoretischer Kohlenstoff-Kohlenstoff-Doppelbindungsgehalt: 1,86 mmol/g

Tabelle 1a: Stoffmengen der einzusetzenden Edukte in mol.

| | Rohstoff | Stoffmenge |
|---|---|---|
| 1 | MSA | 5,05 |
| 2 | AD | 5,53 |
| 3 | HD | 14,46 |
| Festkörper [%] | | 97 |

**1.b Darstellung des erfindungsgemäß einzusetzenden alpha,omega-hydroxyfunktionalisierten Oligoesters (B)**

Die in Tabelle 1b bezeichneten Edukte wurden wie unter 1.a dargestellt in den angegeben Stoffmengen zur Reaktion gebracht. Der resultierende alpha,omega-hydroxyfunktionalisierte Oligoester (B) wies die folgenden Kennzahlen auf:
OH-Zahl: 82 mg KOH/g

Zahlenmittleres Molekulargewicht: 2465 g/mol
Gewichtsmittleres Molekulargewicht: 7257 g/mol
Theoretischer Kohlenstoff-Kohlenstoff-Doppelbindungsgehalt: 2,25 mmol/g

Tabelle 1b: Stoffmengen der einzusetzenden Edukte in mol.

| | Rohstoff | Stoffmenge |
|---|---|---|
| 1 | MSA | 3,24 |
| 2 | AD | 2,88 |
| 3 | HD | 7,32 |
| Festkörper [%] | | 97,6 |

**2. Herstellung eines den erfindungsgemäß einzusetzenden alpha,omegahydroxyfunktionalisierten Oligoester enthaltenden Füllers**

Es wurde ein handelsüblicher Füller verwendet. Dieser setzt sich zusammen aus den drei Komponenten Füllerkomponente, Härter und Verdünner. Die jeweiligen Zusammensetzungen dieser Komponenten sind in Tabelle 2 wiedergegeben. Die Komponenten Füllerkomponente, Härter und Verdünner werden im Verhältnis 100 : 13,5 : 12,3 eingesetzt, wobei sich das besagte Verhältnis auf das Gewicht der Komponenten bezieht. Hieraus ergibt sich die Gesamtmenge des Füllers. Es werden jeweils 2, 4 und 6 Gew.-% des erfindungsgemäß einzusetzenden Oligoesters (Additiv) bezogen auf die Gesamtmenge des Füllers entweder in der Füllerkomponente oder dem Verdünner eingesetzt.

Tabelle 2: Zusammensetzung des eingesetzten Füllers (Füllerkomponente, Härter, Verdünnung). Die Angabe Gew.-% ist jeweils auf die Gesamtmenge der Füllerkomponente, des Härters und der Verdünnung bezogen.

**Härter**

| Komponente | Gew. % |
|---|---|
| Desmodur N3390 (handelsübliches HDI-Trimerisat) | 50,5 |
| Xylol | 5,0 |
| Butylacetat 98-100% | 23,7 |
| 1-Methoxypropylacetat | 9,0 |
| Silquest A-187 (gamma-Glycidoxypropyltrimethoxysilan) | 3,6 |
| Baysilon OL 44 (Grenzflächenadditiv) | 0,7 |
| Dibutylzinndilaurat (1% ig in organischen Lösemitteln) | 75 7,5 |

**Füllerkomponente**

| Komponente | Gew.% |
|---|---|
| Parocryl VP7 56101 (handelsübliche Dispersion eines OH-funktionellen Acrylatharzes in organischen Lösemitteln, Acrylatharzgehalt: 54,75 Gew.-%) | 23,3 |
| Xylol | 4,5 |
| Solventnaphta | 3,5 |
| Nuosperse FA601 (Netz- und Dispergiermittel) | 0,2 |
| 1-Methoxypropylacetat | 3,2 |
| Aerosil 380 (Hydrophile pyrogene Kieselsäure) | 0,2 |
| Bentone 34, 100% (Rheologieadditiv) | 1,6 |
| 1-Methoxypropylacetat | 0,6 |
| Russ flamm - 101 (Russ-Pigment) | 0,1 |
| Bayferrox 920 (Gelbes Eisenpigment) | 1,8 |
| Incomp KL 30 (Mineral auf Basis von Talkum und Dolomit) | 6,5 |
| Heucophos ZP0 (Korrosionsschutzpigment) | 12,4 |
| Luzenac 10MO (Magnesiumsilikat) | 9,2 |
| Titan Rutil | 12,5 |
| Shieldex AC 3 (Korrosionsschutzpiqment) | 6,6 |
| Butylglykolacetat | 1,5 |

**Verdünnung**

| Komponente | Gew.% |
|---|---|
| 1-Methoxypropylacetat | 45,5 |
| Butylacetat 98-100% | 30,0 |
| Xylol | 20,0 |
| Butylglykolacetat | 2,0 |
| Ethyl-3-ethoxypropionat | 1,5 |

(fortgesetzt)

| **Härter** | | **Füllerkomponente** | | **Verdünnung** | |
|---|---|---|---|---|---|
| Komponente | Gew. % | Komponente | Gew.% | Komponente | Gew.% |
| | | 1-Methoxypropylacetat | 2,7 | | |
| | | Xylol | 0,4 | | |
| | | Verlaufsmittel | 0,5 | | |
| | | Baysilone Fluid OL-44 (Grenzflächenadditiv) | 0,1 | | |
| | | Epoxidharz: 75 %ig in Xylol | 8,6 | | |

### 3. Herstellung beschichteter Substrate

Als Substrate wurden Tafeln aus Aluminium, jeweils in Form von Testplatten mit einer Größe von 10 x 20 x 0,45 cm eingesetzt. Die Tafeln wurden zunächst abgeschliffen, um die Oberfläche von Aluminiumoxid zu befreien. Hierzu wurde Schleifpapier mit der Körnung P600 bis P400 eingesetzt.

Die Applikation des Füllers erfolgte mittels pneumatischer Spritzapplikation. Anschließend wurde die erhaltene Füllerschicht für 60 Minuten bei Raumtemperatur getrocknet.

Daraufhin wurde ein Decklack mittels pneumatischer Spritzapplikation appliziert. Die Zusammensetzung des besagten Decklacks ergibt sich aus einer Mischung der drei Komponenten Decklackkomponente, Härter und Verdünnung im Verhältnis 100 : 19,5 : 16 eingesetzt, wobei sich das besagte Verhältnis auf das Gewicht der Komponenten bezieht. Die Zusammensetzungen der besagten Komponenten des eingesetzten Decklacks sind in Tabelle 3 wiedergegeben.

Anschließend erfolgt die Trocknung der resultierenden Decklackschicht für 10 Minuten bei Raumtemperatur gefolgt von der gemeinsamen Härtung von Füller- und Decklackschicht für 30 Minuten bei 60 °C im Umluftofen.

Im dem resultierenden Substrat wies die Füllerschicht eine Trockenfilmschichtdicke von 55 Mikrometer und die Decklackschicht eine Trockenfilmschichtdicke von 66 Mikrometer auf.

Tabelle 3: Zusammensetzung des eingesetzten Decklackes (Decklackkomponente, Härter, Verdünnung). Die Angabe Gew.-% ist jeweils auf die Gesamtmenge der Deckalackkomponente, des Härters und der Verdünnung bezogen.

| Härter | |
|---|---|
| Komponente | Gew.-% |
| Desmodur N3600 (handelsübliches HDI-Trimerisat) | 90,0 |
| Butylacetat 98-100% | 10,0 |

| Decklackkomponente | |
|---|---|
| Komponente | Gew.-% |
| Acrylique 324 (handelsübliche Dispersion eines OH-funktionellen Acrylatharzes in organischen Lösemitteln, Acrylatharzgehalt: 60 Gew.-%) | 18,70 |
| Uno TSA Acrylic (handelsübliche Dispersion eines OH-funktionellen Acrylatharzes in organischen Lösemitteln, Acrylatharzgehalt: 65 Gew.-%) | 15,26 |
| Disperbyk-180 (Netz- und Dispergieradditiv) | 0,97 |
| Aerosil R972 (hydrophobe pyrogene Kieselsäure) | 0,32 |
| Bentone 34, 100% (Rheologieadditiv) | 0,24 |
| Titan Rutil (Tiona 595) | 39,04 |
| Xylol | 2,92 |
| Butylacetat 98-100% | 3,17 |

| Verdünnung | |
|---|---|
| Komponente | Gew.-% |
| 1-Methoxypropylacetat | 46,5 |
| Butylacetat 98-100% | 30,0 |
| Xylol | 20,0 |
| Butylglycolacetat | 2,0 |
| Ethyl-3-ethoxypropionat | 1,5 |

(fortgesetzt)

| Härter | Decklackkomponente | | Verdünnung |
|---|---|---|---|
| | Mischlack auf Polyesterbasis | 17,88 | |
| | Solventnaphta 165/185 | 0,57 | |
| | Acrylatbasierte ockerfarbene Tönpaste | 0,78 | |
| | Acrylatbasierte schwarze Tönpaste | 0,15 | |

**4. Untersuchung der Haftungseigenschaften**

Die Haftungseigenschaften der hergestellten Beschichtungen wurden mittels Gitterschnitt (DIN 2409) einmal direkt nach der Applikation und einmal nach 16 stündiger Lagerung des beschichteten Substrates bei 40 °C untersucht.

Die Bewertung der Haftung erfolgte über ein Notensystem mit den Noten 0 bis 5, wobei die Note 0 für Beschichtungen vergeben wurde, die nach der Haftungsprüfung keine sichtbaren Spuren aufwiesen (sehr gute Haftung) und die Note 5 für Beschichtungen vergeben wurde, die nach der Haftungsprüfung deutlich abgelöste Bereiche aufwiesen (ungenügende Haftung).

Tabelle 4 zeigt die Haftungseigenschaften der hergestellten Beschichtungen für unterschiedle Konzentrationen des Additivs. Demnach hat es keinen signifikanten Einfluss auf die Performance des Additivs, ob dieses in der Füllerkomponente oder im Verdünner eingesetzt wird. Zudem lässt sich durch den Einsatz des Additivs ein deutliche Verbesserung der Haftung erzielen.

Tabelle 4: Haftungseigenschaften des additivierten Füllers (Additiv befindet sich in der Füllerkomponente oder im Verdünner), direkt nach der Applikation und nach 16 stündiger Lagerung des beschichteten Substrates bei 40 °C.

| Direkt nach Applikation | | | | 16 h nach Applikation bei 40°C | | |
|---|---|---|---|---|---|---|
| **Substrat** | **Gew.-% Additiv** | **Haftung** | | **Substrat** | **Gew.-% Additiv** | **Haftung** |
| Ohne Additiv | 0 | 2 | | Ohne Additiv | 0 | 3 |
| | 2 | 0,5 | | | 2 | 0,5 |
| | 4 | 0 | | | 4 | 0,5 |
| Additiv im Verdünner | 6 | 0 | | Additiv im Verdünner | 6 | 0 |
| Ohne Additiv | 0 | 1 | | Ohne Additiv | 0 | 3 |
| | 2 | 0 | | | 2 | 0,5 |
| | 4 | 0,5 | | | 4 | 0 |
| Additiv in der Füllerkomponente | 6 | 0 | | Additiv in der Füllerkomponente | 6 | 0 |

**Haftung nach Konstant-Klima-Test**

Es wurden dieselben beschichteten Substrate wie oben bereits beschrieben hergestellt und anschließend einer Bewitterung in einer Klimakammer ausgesetzt (Konstant-Klima-Test gemäß DIN EN ISO 6270-2 CH). Dabei wurden die Proben 10 Tage in der Klimakammer bei 100 % Luftfeuchtigkeit und 40 °C gelagert. Anschließend wurde die Haftung der Proben 1 h, 3 h und 24 h nach Entnahme aus der Klimakammer mittels Dampfstrahltest (DIN EN ISO 66552) untersucht. Dabei wird ein Dampfstrahl eine Minute lang bei einer Temperatur von 60 °C mit 67 bar in einer Entfernung von 10 cm senkrecht auf den Prüfkörper gerichtet. Von jeder Beschichtung wurden insgesamt 6 Proben hergestellt und jeweils einzeln untersucht. Anschließend wurde der Mittelwert gebildet. Die Ergebnisse sind in Tabelle 5 dargestellt. Demnach hat es keinen signifikanten Einfluss auf die Performance des Additivs, ob dieses in der Füllerkomponente oder im Verdünner eingesetzt wird. Zudem lässt sich durch den Einsatz des Additivs ein deutliche Verbesserung der

Haftung erzielen.

Tabelle 5: Haftungseigenschaften des additivierten Füllers nach Belastung in einer Konstant-Kima-Kammer (Additiv befindet sich im Füller oder im Verdünner).

| | | Haftung | | |
|---|---|---|---|---|
| **Substrat** | **Gew.-% Additiv** | **1 h** | **3 h** | **24 h** |
| Ohne Additiv | 0 | 4 | 4 | 4 |
| | 2 | 3 | 3 | 3 |
| | 4 | 0 | 1 | 1 |
| Additiv im Verdünner | 6 | 0 | 0 | 0,5 |
| Ohne Additiv | 0 | 5 | 4 | 4 |
| | 2 | 2 | 3 | 1 |
| | 4 | 0,5 | 0,5 | 1 |
| Additiv in der Füllerkomponente | 6 | 0 | 0,5 | 0,5 |

**6. Einfluss der Lagerung**

Die Füllerkomponente gemäß Tabelle 2 wurde wie oben beschrieben mit 5 % des alpha,omega-hydroxyfunktionalisierte Oligoesters (A) und alpha,omega-hydroxyfunktionalisierte Oligoesters (B) bezogen auf die Gesamtmenge des Füllers additiviert. Die so erhaltende Füllerkomponente wurde bei Raumtemperatur für insgesamt sieben Monate gelagert. Nach einem, drei, fünf und sieben Monaten wurden, wie unter Punkt 3 beschrieben, entsprechende Substrate hergestellt. Diese wurden für 10 Tage in einer Konstant-Klima-Kammer wie unter Punkt 5 dargestellt gelagert und anschließend nach einer Regenerationszeit von 24 h die Haftung mittels Dampfstrahltest untersucht. Die Ergebnisse sind in Tabelle 6 dargestellt. Demnach lässt sich auch nach mehrmonatiger Lagerung der das Additiv enthaltenden Füllerkomponente keine Verschlechterung der resultierenden Haftungseigenschaften feststellen.

Tabelle 6: Haftungseigenschaften des additivierten Füllers nach Belastung in einer Konstant-Kima-Kammer (verschiedene Monate); der Eintrag (B) bezieht sich auf den alpha,omega-hydroxyfunktionalisierten Oligoester (B) und der Eintrag (A) auf den alpha,omega-hydroxyfunktionalisierten Oligoester (A).

| Zeit (Monate) | Additiv | Haftung |
|---|---|---|
| 0 | Ohne Additiv | 3,0 |
| | (A) | 0,5 |
| | (B) | 0,5 |
| 1 | Ohne Additiv | 4,0 |
| | (A) | 0,5 |
| | (B) | 0,5 |
| 3 | Ohne Additiv | 4,0 |
| | (A) | 0,5 |
| | (B) | 0,5 |
| 5 | Ohne Additiv | 4,0 |
| | (A) | 0,0 |
| | (B) | 0,5 |
| 7 | Ohne Additiv | 3,0 |
| | (A) | 0,5 |
| | (B) | 0,5 |

**Patentansprüche**

1. Lösemittelbasierter Füller, **dadurch gekennzeichnet, dass** dieser mindestens einen alpha,omega-hydroxyfunktionalisierten Oligoester enthält, welcher eine OH-Zahl von 30 bis 160 mg KOH/g, eine Säurezahl von 0 bis 10 mg KOH/g, einen theoretischen Kohlenstoff-Kohlenstoff-Doppelbindungsgehalt von 1 bis 3 mmol/g, ein zahlenmittleres Molekulargewicht von 1000 bis 3000 g/mol und ein gewichtsmittleres Molekulargewicht von 2800 bis 10000 g/mol besitzt und wobei die Summe über die gewichtsprozentualen Anteile aller alpha,omega-hydroxyfunktionalisierten Oligoester 0,5 bis 9 Gew.-% bezogen auf die Gesamtmenge des lösemittelbasierten Füllers beträgt.

2. Lösemittelbasierter Füller nach Anspruch 1, **dadurch gekennzeichnet, dass** zur Herstellung des besagten alpha,omega-hydroxyfunktionalisierten Oligoesters mindestens eine gesättigte lineare aliphatische Dicarbonsäure oder deren Anhydrid, mindestens eine einfach ungesättigte lineare aliphatische Dicarbonsäure oder deren Anhydrid und mindestens ein gesättigtes aliphatisches Diol eingesetzt wird.

3. Lösemittelbasierter Füller nach mindestens einem der Ansprüche 1 oder 2, **dadurch gekennzeichnet, dass** die Summe über die gewichtsprozentualen Anteile aller alpha,omega-hydroxyfunktionalisierten Oligoester 1,5 bis 7,5 Gew.-% bezogen auf die Gesamtmenge des lösemittelbasierten Füllers beträgt.

4. Lösemittelbasierter Füller nach mindestens einem der Ansprüche 1 bis 3, **dadurch gekennzeichnet, dass** der besagte alpha,omega-hydroxyfunktionalisierte Oligoester die folgende Strukturformel (I) besitzt:

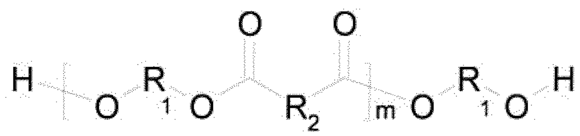

(I)

wobei

- die (m + 1) Reste $R_1$ unabhängig voneinander ausgewählt sind aus der Gruppe der linearen oder cyclischen Alkylenreste,
- die m Reste $R_2$ unabhängig voneinander ausgewählt sind aus der Gruppe der Alkylen- und Alkenylenreste, wobei das Verhältnis von Alkylen- zu Alkenylenresten gerade so gewählt ist, dass der besagte alpha,omega-hydroxyfunktionalisierte Oligoester der Strukturformel (I) einen theoretischen Kohlenstoff-Kohlenstoff-Doppelbindungsgehalt von 1 bis 3 mmol/g besitzt, und
- der Index m so gewählt ist, dass das zahlenmittlere Molekulargewicht des besagten alpha,omega-hydroxyfunktionalisierten Oligoesters der Strukturformel (I) 1000 bis 3000 g/mol beträgt,

5. Lösemittelbasierter Füller nach Anspruch 4, **dadurch gekennzeichnet, dass** die (m + 1) Reste $R_1$ ausgewählt sind aus der Gruppe der linearen Alkylenreste mit 6 bis 10 Kohlenstoffatomen.

6. Lösemittelbasierter Füller nach mindestens einem der Ansprüche 4 und 5, **dadurch gekennzeichnet, dass** die m Reste $R_2$ ausgewählt sind aus der Gruppe der linearen Alkylenreste mit 4 bis 8 Kohlenstoffatomen und der linearen Alkenylenreste mit 2 bis 4 Kohlenstoffatomen.

7. Lösemittelbasierter Füller nach mindestens einem der Ansprüche 4 bis 6, **dadurch gekennzeichnet, dass** der besagte alpha,omega-hydroxyfunktionalisierte Oligoester ein zahlenmittleres Molekulargewicht von 1200 bis 1800 g/mol besitzt.

8. Lösemittelbasierter Füller nach mindestens einem der Ansprüche 4 bis 7, **dadurch gekennzeichnet, dass** der besagte alpha,omega-hydroxyfunktionalisierte Oligoester ein gewichtsmittleres Molekulargewicht von 3000 bis 6000 g/mol besitzt.

9. Lösemittelbasierter Füller nach mindestens einem der Ansprüche 4 bis 8, **dadurch gekennzeichnet, dass** der besagte alpha,omega-hydroxyfunktionalisierte Oligoester eine OH-Zahl von 70 bis 150 mg KOH/g besitzt.

10. Lösemittelbasierter Füller nach mindestens einem der Ansprüche 4 bis 9, **dadurch gekennzeichnet, dass** der

besagte alpha,omega-hydroxyfunktionalisierte Oligoester einen theoretischen Kohlenstoff-Kohlenstoff-Doppelbindungsgehalt von 1,4 bis 2,5 mmol/g besitzt.

**11.** Mehrschichtlackierung auf einem Substrat, umfassend in dieser Reihenfolge übereinanderliegend

(A) mindestens eine erste Lackschicht, welche aus der Applikation des lösemittelbasierten Füllers nach mindestens einem der Ansprüche 1 bis 10 resultiert, und
(B) mindestens eine Decklackschicht.

**12.** Verfahren zur Herstellung einer Mehrschichtlackierung auf einem Substrat, umfassend

(A) Aufbringen des lösemittelbasierten Füllers nach mindestens einem der Ansprüche 1 bis 10 auf einem Substrat, woraus eine erste Lackschicht resultiert,
(B) Trocknen der in (A) aufgebrachten Schicht,
(C) Aufbringen einer Decklackschicht,
(D) gemeinsames Härten der in (A) und (C) aufgebrachten Lackschichten.

**13.** Verwendung mindestens eines alpha,omega-hydroxyfunktionalisierten Oligoester zur Haftungsverbesserung in einem lösemittelbasierten Füller, wobei der besagte alpha,omega-hydroxyfunktionalisierte Oligoester eine OH-Zahl von 30 bis 160 mg KOH/g, eine Säurezahl von 0 bis 10 mg KOH/g, einen theoretischen Kohlenstoff-Kohlenstoff-Doppelbindungsgehalt von 1 bis 3 mmol/g, ein zahlenmittleres Molekulargewicht von 1000 bis 3000 g/mol und ein gewichtsmittleres Molekulargewicht von 2800 bis 10000 g/mol besitzt und wobei die Summe über die gewichtsprozentualen Anteile aller alpha,omega-hydroxyfunktionalisierten Oligoester 0,5 bis 9 Gew.-% bezogen auf die Gesamtmenge des lösemittelbasierten Füllers beträgt.

**14.** Verwendung gemäß Anspruch 13, **dadurch gekennzeichnet, dass** der besagte alpha,omega-hydroxyfunktionalisierten Oligoester zur Haftungsverbesserung in lösemiftelbasierten Füllern bei der Reparaturlackierung oder der Lackierung von Nutzfahrzeugen eingesetzt wird.

## Claims

**1.** Solventborne filler **characterized in that** it comprises at least one alpha,omega-hydroxy-functionalized oligoester which possesses an OH number of 30 to 160 mg KOH/g, an acid number of 0 to 10 mg KOH/g, a theoretical carbon-carbon double bond content of 1 to 3 mmol/g, a number-average molecular weight of 1000 to 3000 g/mol and a weight-average molecular weight of 2800 to 10 000 g/mol, the sum of the weight percentage fractions of all the alpha,omega-hydroxy-functionalized oligoesters being 0.5 to 9 wt.%, based on the total amount of the solventborne filler.

**2.** Solventborne filler according to Claim 1, **characterized in that** said alpha,omega-hydroxy-functionalized oligoester is prepared using at least one saturated linear aliphatic dicarboxylic acid or its anhydride, at least one singly unsaturated linear aliphatic dicarboxylic acid or its anhydride and at least one saturated aliphatic diol.

**3.** Solventborne filler according to at least one of Claims 1 and 2, **characterized in that** the sum of the weight percentage fractions of all the alpha,omega-hydroxy-functionalized oligoesters is 1.5 to 7.5 wt.%, based on the total amount of the solventborne filler.

**4.** Solventborne filler according to at least one of Claims 1 to 3, **characterized in that** said alpha,omega-hydroxy-functionalized oligoester possesses the following structural formula (I):

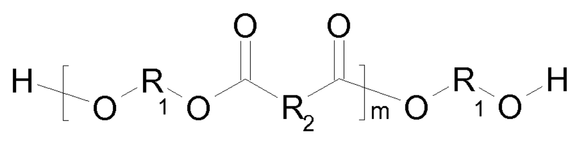

(I)

where

- the (m + 1) radicals $R_1$ independently of one another are selected from the group of linear or cyclic alkylene radicals,
- the m radicals $R_2$ independently of one another are selected from the group of alkylene and alkenylene radicals, the ratio of alkylene to alkenylene radicals being specifically selected such that said alpha,omega-hydroxy-functionalized oligoester of the structural formula (I) possesses a theoretical carbon-carbon double bond content of 1 to 3 mmol/g, and
- the index m is selected such that the number-average molecular weight of said alpha,omega-hydroxy-functionalized oligoester of the structural formula (I) is 1000 to 3000 g/mol.

**5.** Solventborne filler according to Claim 4, **characterized in that** the (m + 1) radicals $R_1$ are selected from the group of linear alkylene radicals having 6 to 10 carbon atoms.

**6.** Solventborne filler according to at least one of Claims 4 and 5, **characterized in that** the m radicals $R_2$ are selected from the group of linear alkylene radicals having 4 to 8 carbon atoms and of linear alkenylene radicals having 2 to 4 carbon atoms.

**7.** Solventborne filler according to at least one of Claims 4 to 6, **characterized in that** said alpha,omega-hydroxy-functionalized oligoester possesses a number-average molecular weight of 1200 to 1800 g/mol.

**8.** Solventborne filler according to at least one of Claims 4 to 7, **characterized in that** said alpha,omega-hydroxy-functionalized oligoester possesses a weight-average molecular weight of 3000 to 6000 g/mol.

**9.** Solventborne filler according to at least one of Claims 4 to 8, **characterized in that** said alpha,omega-hydroxy-functionalized oligoester possesses an OH number of 70 to 150 mg KOH/g.

**10.** Solventborne filler according to at least one of Claims 4 to 9, **characterized in that** said alpha,omega-hydroxy-functionalized oligoester possesses a theoretical carbon-carbon double bond content of 1.4 to 2.5 mmol/g.

**11.** Multicoat paint system on a substrate, comprising one above the other in this order

(A) at least one first coat, resulting from the application of the solventborne filler according to at least one of Claims 1 to 10, and
(B) at least one topcoat.

**12.** Process for producing a multicoat paint system on a substrate, comprising

(A) applying the solventborne filler according to at least one of Claims 1 to 10 to a substrate, to give a first coat,
(B) drying the coat applied in (A),
(C) applying a topcoat,
(D) jointly curing the coats applied in (A) and (C).

**13.** Use of at least one alpha,omega-hydroxy-functionalized oligoester for improving adhesion in a solventborne filler, where said alpha,omega-hydroxy-functionalized oligoester possesses an OH number of 30 to 160 mg KOH/g, an acid number of 0 to 10 mg KOH/g, a theoretical carbon-carbon double bond content of 1 to 3 mmol/g, a number-average molecular weight of 1000 to 3000 g/mol and a weight-average molecular weight of 2800 to 10 000 g/mol, the sum of the weight percentage fractions of all the alpha,omega-hydroxy-functionalized oligoesters being 0.5 to 9 wt.%, based on the total amount of the solventborne filler.

**14.** Use according to Claim 13, **characterized in that** said alpha,omega-hydroxy-functionalized oligoester is used for improving adhesion in solventborne fillers in refinish or in the finishing of commercial vehicles.

## Revendications

**1.** Matière de charge à base de solvant, **caractérisée en ce que** celle-ci contient au moins un oligoester alpha,oméga-hydroxyfonctionnalisé, qui présente un indice OH de 30 à 160 mg KOH/g, un indice d'acidité de 0 à 10 mg KOH/g,

une teneur en doubles liaisons carbone-carbone théorique de 1 à 3 mmol/g, un poids moléculaire moyen en nombre de 1 000 à 3 000 g/mol et un poids moléculaire moyen en poids de 2 800 à 10 000 g/mol, la somme des proportions en pourcentage en poids de tous les oligoesters alpha,oméga-hydroxyfonctionnalisés étant de 0,5 à 9 % en poids, par rapport à la quantité totale de la matière de charge à base de solvant.

**2.** Matière de charge à base de solvant selon la revendication 1, **caractérisée en ce que**, pour la fabrication dudit oligoester alpha,oméga-hydroxyfonctionnalisé, au moins un acide dicarboxylique aliphatique linéaire saturé ou son anhydride, au moins un acide dicarboxylique aliphatique linéaire monoinsaturé ou son anhydride et moins un diol aliphatique saturé sont utilisés.

**3.** Matière de charge à base de solvant selon au moins l'une quelconque des revendications 1 ou 2, **caractérisée en ce que** la somme des proportions en pourcentage en poids de tous les oligoesters alpha,oméga-hydroxyfonctionnalisés est de 1,5 à 7,5 % en poids, par rapport à la quantité totale de la matière de charge à base de solvant.

**4.** Matière de charge à base de solvant selon au moins l'une quelconque des revendications 1 à 3, **caractérisée en ce que** ledit oligoester alpha,oméga-hydroxyfonctionnalisé présente la formule structurale (I) suivante :

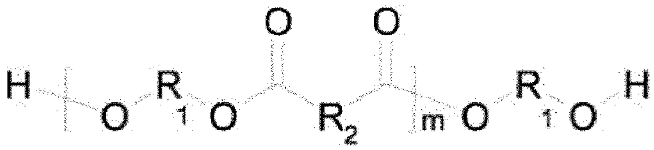

(I)

dans laquelle

- les (m+1) radicaux $R_1$ sont choisis indépendamment les uns des autres dans le groupe des radicaux alkylène linéaires ou cycliques,
- les m radicaux $R_2$ sont choisis indépendamment les uns des autres dans le groupe des radicaux alkylène et alcénylène, le rapport entre les radicaux alkylène et alcénylène étant choisi de sorte que ledit oligoester alpha,oméga-hydroxyfonctionnalisé de formule structurale (I) présente une teneur en doubles liaisons carbone-carbone théorique de 1 à 3 mmol/g, et
- l'indice m est choisi de sorte que le poids moléculaire moyen en nombre dudit oligoester alpha,oméga-hydroxyfonctionnalisé de formule structurale (I) soit de 1 000 à 3 000 g/mol.

**5.** Matière de charge à base de solvant selon la revendication 4, **caractérisée en ce que** les (m+1) radicaux $R_1$ sont choisis dans le groupe des radicaux alkylène linéaires de 6 à 10 atomes de carbone.

**6.** Matière de charge à base de solvant selon au moins l'une quelconque des revendications 4 et 5, **caractérisée en ce que** les m radicaux $R_2$ sont choisis dans le groupe des radicaux alkylène linéaires de 4 à 8 atomes de carbone et des radicaux alcénylène linéaires de 2 à 4 atomes de carbone.

**7.** Matière de charge à base de solvant selon au moins l'une quelconque des revendications 4 à 6, **caractérisée en ce que** ledit oligoester alpha,oméga-hydroxyfonctionnalisé présente un poids moléculaire moyen en nombre de 1 200 à 1 800 g/mol.

**8.** Matière de charge à base de solvant selon au moins l'une quelconque des revendications 4 à 7, **caractérisée en ce que** ledit oligoester alpha,oméga-hydroxyfonctionnalisé présente un poids moléculaire moyen en poids de 3 000 à 6 000 g/mol.

**9.** Matière de charge à base de solvant selon au moins l'une quelconque des revendications 4 à 8, **caractérisée en ce que** ledit oligoester alpha,oméga-hydroxyfonctionnalisé présente un indice OH de 70 à 150 mg KOH/g.

**10.** Matière de charge à base de solvant selon au moins l'une quelconque des revendications 4 à 9, **caractérisée en ce que** ledit oligoester alpha,oméga-hydroxyfonctionnalisé présente une teneur en doubles liaisons carbone-carbone théorique de 1,4 à 2,5 mmol/g.

**11.** Vernissage multicouche sur un substrat, comprenant, superposées dans cet ordre :

(A) au moins une première couche de vernis, qui résulte de l'application de la matière de charge à base de solvant selon au moins l'une quelconque des revendications 1 à 10,
et
(B) au moins une couche de vernis supérieure.

**12.** Procédé de fabrication d'un vernissage multicouche sur un substrat, comprenant :

(A) l'application de la matière de charge à base de solvant selon au moins l'une quelconque des revendications 1 à 10 sur un substrat, une première couche de vernis en résultant,
(B) le séchage de la couche appliquée en (A),
(C) l'application d'une couche de vernis supérieure,
(D) le durcissement commun des couches de vernis appliquées en (A) et (C).

**13.** Utilisation d'au moins un oligoester alpha,oméga-hydroxyfonctionnalisé pour l'amélioration de l'adhérence dans une matière de charge à base de solvant, ledit oligoester alpha,oméga-hydroxyfonctionnalisé présentant un indice OH de 30 à 160 mg KOH/g, un indice d'acidité de 0 à 10 mg KOH/g, une teneur en doubles liaisons carbone-carbone théorique de 1 à 3 mmol/g, un poids moléculaire moyen en nombre de 1 000 à 3 000 g/mol et un poids moléculaire moyen en poids de 2 800 à 10 000 g/mol, la somme des proportions en pourcentage en poids de tous les oligoesters alpha,oméga-hydroxyfonctionnalisés étant de 0,5 à 9 % en poids, par rapport à la quantité totale de la matière de charge à base de solvant.

**14.** Utilisation selon la revendication 13, **caractérisée en ce que** ledit oligoester alpha,oméga-hydroxyfonctionnalisé est utilisé pour l'amélioration de l'adhérence dans des matières de charge à base de solvant lors du vernissage de réparation ou du vernissage de véhicules utilitaires.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- Römpp-Lexikon Lacke und Druckfarben. Georg Thieme Verlag, 1998, 73-74
- Römpp-Lexikon Lacke und Druckfarben. Georg Thieme Verlag, 1998, 196-197
- Römpp-Lexikon Lacke und Druckfarben. Georg Thieme Verlag, 1998, 250-252